# EUROPÄISCHE PATENTSCHRIFT

(11) **EP 2 496 505 B1**
(45) Veröffentlichungstag und Bekanntmachung des Hinweises auf die Patenterteilung: **17.09.2014**
(21) Anmeldenummer: 10784726.1
(22) Anmeldetag: 04.11.2010
(51) Int. Cl.: B65H 27/00, B65H 29/58, B65G 29/00

(54) **VORRICHTUNG ZUR HANDHABUNG VON WERTSCHEINEN**
DEVICE FOR HANDLING VALUE NOTES
DISPOSITIF POUR MANIPULER DES DOCUMENTS DE VALEUR

(30) Priorität: 05.11.2009 DE 102009052040
(43) Veröffentlichungstag der Anmeldung: 12.09.2012
(73) Patentinhaber: Wincor Nixdorf International GmbH, 33106 Paderborn (DE)
(72) Erfinder: FEHRENBACH, Christian, 78136 Schonach (DE)
(74) Vertreter: Richly, Erik
(86) Internationale Anmeldenummer: PCT/EP2010/066815
(87) Internationale Veröffentlichungsnummer: WO 2011/054904

(56) Entgegenhaltungen:
- EP-A2- 0 315 754
- GB-A- 2 132 737
- JP-A- 6 227 700
- JP-A- 8 012 102
- JP-A- 60 061 435
- JP-A- 2000 128 369
- JP-A- 2009 184 753
- JP-A- 2009 249 174
- US-A- 3 775 821
- US-A- 4 473 221
- US-A- 5 735 516

## Beschreibung

Die Erfindung betrifft eine Vorrichtung zur Handhabung von Wertscheinen, die mindestens eine Welle umfasst, auf der mindestens ein Transportelement zum Transport der Wertscheine angeordnet ist.

Bei der Welle handelt es sich insbesondere um die Welle einer Weiche, mit deren Hilfe die Wertscheine umgelenkt werden können. Eine solche Weiche ist aus dem Dokument WO 2009/018879 A1 bekannt. Die aus diesem Dokument bekannte Weiche umfasst eine Welle, auf der eine Vielzahl von Weichenflügeln starr und ortsfest montiert ist. Bei alternativen Ausführungsformen solcher Weichen ist zwischen jeweils zwei Weichenflügeln eine Transportrolle angeordnet, durch die die Wertscheine geführt werden, während sie die Weiche passieren. Durch solche Transportrollen wird der Abstand zwischen zwei in Transportrichtung der Wertscheine gesehen aufeinanderfolgenden Transportrollen verringert, so dass zum einen kleinere Wertscheine transportiert werden können und zum anderen die Sicherheit des Transports der Wertscheine erhöht wird. Eine solche Weichenwelle, auf der abwechselnd Weichenflügel und Transportrollen montiert sind, erfordert eine aufwändige Montage, da die Weichenflügel und Transportrollen abwechselnd axial auf die Welle aufgeschoben und über zusätzliche Elemente gegen ein axiales Verrutschen gesichert werden müssen. Eine solche Montage ist aufwändig und verursacht hohe Kosten. Ferner müssen eine Vielzahl von Einzelteilen gefertigt werden, insbesondere muss jeder Weichenflügel einzeln ausgebildet sein, so dass hierdurch weitere Kosten entstehen. Des Weiteren ist es nachteilig, dass bei einer solchen Konstruktion die Welle erst dann in die Weiche eingebaut werden kann, wenn alle Transportrollen und alle weichenflügel auf ihr montiert sind, was insbesondere bei geringen Platzverhältnissen zu Problemen führen kann.

Aus dem Dokument JP 06227700 A ist eine Rolle bekannt, die aus zwei Segmenten besteht, die zur Befestigung auf einer Welle über eine an der Mantelfläche der Segmente ausgebildete Klippverbindung miteinander verbindbar sind.

Aus zwei getrennten Segmenten gebildete Rollen sind auch aus den Dokumenten GB 2132737 A, JP 60061435 A, JP 08012102 A und US 4473221 A bekannt.

Die Dokumente US 377821 A, JP 2000128369 A und EP 0 315 754 A2 beschreiben Rollen, die aus zwei über Scharniere miteinander verbundenen Segmenten gebildet sind.

In den Dokumenten US 5735516 A, JP 2009184753 A und JP 2009249174 A sind Vorrichtungen zur Handhabung von blattförmigen Medien beschrieben.

Es ist Aufgabe der Erfindung, eine Vorrichtung zur Handhabung von Wertscheinen anzugeben, bei der mindestens ein Transportelement auf einfache Weise auf eine Welle der Vorrichtung montierbar ist.

Diese Aufgabe wird jeweils durch eine Vorrichtung mit den Merkmalen eines der unabhängigen Vorrichtungsansprüche gelöst. Vorteilhafte Weiterbildungen der Erfindung sind in den abhängigen Ansprüchen angegeben.

Gemäß der Erfindung umfasst das Transportelement ein erstes Segment und ein in einem unmontierten Zustand vom ersten Segment getrenntes zweites Segment. Bei der Montage werden die Segmente miteinander verbunden, so dass in einem montierten Zustand das erste Segment und das zweite Segment fest miteinander verbunden sind und die Welle von den verbundenen Segmenten umschlossen wird. Durch das Ausbilden des Transportelementes aus zwei miteinander verbindbaren Segmenten wird erreicht, dass das Transportelement nicht axial auf die Welle aufgeschoben werden muss, sondern radial montiert werden kann. Unter einer radialen Montage wird insbesondere ein Aufstecken der Segmente auf die Welle verstanden, wobei die Bewegung der Segmente, die bei der Montage erfolgt, in radiale Richtung der Welle gerichtet ist. Durch die radiale Montagemöglichkeit des Transportelementes wird erreicht, dass das Transportelement auch dann auf die Welle montiert werden kann, wenn die Welle bereits in der Vorrichtung montiert ist. Auf diese Weise wird wiederum die Montage der Welle vereinfacht, da diese ohne die auf ihr montierten Transportelemente einfacher zu handhaben ist. Ferner kann das Transportelement durch die radiale Montage beispielsweise in eine umlaufende Nut der Welle eingesetzt werden, so dass das Transportelement gegen ein axiales Verrutschen gesichert ist, ohne dass hierfür weitere Befestigungselemente benötigt werden. Eine Montage des Transportelementes in einer solchen Nut ist bei einer axialen Montage dagegen nicht möglich.

Ferner wird durch die radiale Montage ermöglicht, dass das Transportelement zwischen bereits auf der Welle angeordneten und fest mit dieser verbundenen Elementen montiert werden kann. Insbesondere kann das Transportelement somit zwischen zwei bereits auf der Welle befindlichen Führungsfingern einer Weiche angeordnet werden.

Durch die zuvor beschriebene Vereinfachung der Montage werden der Aufwand der Montage sowie die hierdurch bedingten Kosten reduziert. Ferner wird der für die Montage der Welle selbst benötigte Bauraum reduziert, so dass insgesamt Platz eingespart werden kann.

Gemaß der Erfindung sind die Segmente im montierten Zustand über mindestens eine Rastverbindung und/oder mindestens eine Steckverbindung miteinander verbunden. Die Segmente sind vorzugsweise über zwei Rastverbindungen und/oder über zwei Steckverbindungen miteinander verbunden, wobei jeweils ein erstes Ende des ersten Segmentes mit einem ersten Ende des zweiten Segmentes über eine erste Rast- und/oder Steckverbindung verbunden ist und ein zweites Ende des ersten Segmentes mit einem zweiten Ende des zweiten Segmentes über eine zweite Rast- und/oder Steckverbindung verbunden ist. Durch das Verbinden der Segmente über Rast- und/oder Steckverbindungen wird erreicht, dass die Segmente auf einfache Weise ohne zusätzliche Verbindungselemente miteinander verbindbar sind, so dass die Montage weiter vereinfacht wird. Ferner wird durch eine solche Rast- und/oder Steckverbindung ein sicheres Zusammenhalten der Segmente im montierten Zustand gewährleistet.

Bei einer Ausführungsform der Erfindung können die Segmente auch über mindestens zwei Schrauben miteinander verbunden sein, wobei vorzugsweise das erste Ende des ersten Segmentes über eine erste Schraube mit dem ersten Ende des zweiten Segmentes und das zweite Ende des ersten Segmentes über eine zweite Schraube mit dem zweiten Ende des zweiten Segments verbunden ist. Durch das Verbinden der Segmente über Schrauben wird erreicht, dass die Segmente jederzeit störungsfrei lösbar sind und beliebig oft miteinander verbunden oder voneinander getrennt werden können. Ferner wird durch eine solche Schraubverbindung erreicht, dass die Segmente sicher miteinander verbunden sind und ein unbeabsichtigtes Lösen der Segmente voneinander vermieden wird.

Des Weiteren ist es vorteilhaft, wenn die Segmente zerstörungsfrei voneinander lösbar sind. Hierzu sind die Segmente bei der Verbindung der Segmente über eine Steck- und/oder Rastverbindung die Steck- und/oder Rastelemente so elastisch ausgebildet, dass sie beim Lösen der Rast- oder Steckverbindung zerstörungsfrei voneinander getrennt werden können. Auf diese Weise wird erreicht, dass die Segmente, nachdem sie von der Welle gelöst wurden, später erneut montiert werden können. Somit wird erreicht, dass die Segmente mehrfach verwendet werden können, wodurch Kosten eingespart werden.

Des Weiteren können die Segmente im montierten Zustand über mindestens eine Klebverbindung miteinander verbunden sein. Auf diese Weise werden eine einfache Montage und ein sicheres Zusammenhalten der Segmente erreicht. Es ist besonders vorteilhaft, wenn die Klebverbindung mit Hilfe eines Zweikomponenten-Klebers ausgebildet ist, der eine sichere Verbindung der Segmente ermöglicht.

Des Weiteren können alternativ die Segmente auch gleichzeitig über eine Rast-, eine Steck-, eine Schraub- und/oder eine Klebverbindung miteinander verbunden sein. Insbesondere ist es auch möglich, dass die ersten Enden der beiden Segmente über eine andere Verbindungsart miteinander verbunden sind als die beiden zweiten Enden der Segmente.

Bei einer besonders bevorzugten Ausführungsform der Erfindung sind das erste Segment und das zweite Segment identisch ausgebildet. Hierdurch wird erreicht, dass nur eine Segmentform gefertigt werden muss, wodurch der Aufwand und die Kosten aufgrund der hohen zu fertigenden Stückzahlen reduziert werden. Des Weiteren werden Fehler bei der Montage vermieden, da die Segmente nicht miteinander verwechselt werden können.

Das Transportelement umfasst insbesondere eine Transportrolle und/oder eine Transportwalze, durch die die Wertscheine beim Transport entlang eines Transportpfades geführt werden. Auf der Welle sind insbesondere mehrere Transportrollen und/oder Transportwalzen angeordnet, so dass eine sichere Führung der Wertscheine gewährleistet ist.

Die beiden Segmente sind erfindungsgemäß ringsegmentförmig ausgebildet, so dass durch das Zusammensetzen der beiden ringsegmentförmigen Segmente eine Transportrolle gebildet wird. Auf diese Weise kann eine Transportrolle auf einfache Weise auf der Welle montiert werden.

Gemäß der Erfindung umfassen die Segmente jeweils einen ersten und einen zweiten Teilbereich, wobei die Teilbereiche in axiale Richtung des Segmentes gesehen unmittelbar aneinander angrenzen. Die axiale Richtung ist hierbei diejenige Richtung, in die die Achse der Welle gerichtet ist, auf der die Segmente montiert werden. Beide Teilbereiche umschließen jeweils einen Winkel von etwa 180°, vorzugsweise einen Winkel von genau 180°. Die beiden Teilbereiche sind jeweils derart angeordnet, dass sie in Umfangsrichtung des Segments gesehen relativ zueinander versetzt sind. Der erste Teilbereich eines jeden Segmentes hat jeweils in einem Endbereich auf seiner Mantelfläche eine Aussparung, insbesondere ein halbzylindrische Aussparung, und der zweite Teilbereich hat jeweils ein zur Aussparung komplementäres Eingriffselement. Im montierten Zustand greift das Eingriffselement des ersten Segments in die Aussparung des zweiten Elements und das Eingriffselement des zweiten Segmentes in die Aussparung des ersten Segmentes. Auf diese Weise können die beiden Segmente auf einfache Weise über eine Rastverbindung sicher miteinander verbunden werden. Ferner wird hierdurch erreicht, dass die beiden Segmente identisch ausgebildet sind, so dass die Segmente nicht verwechselt werden können und nur eine Segmentart gefertigt werden muss.

Die Welle kann mindestens eine, vorzugsweise mehrere, umlaufende Vertiefungen haben, wobei die Breite der Vertiefungen der Breite des Transportelements entspricht oder geringfügig größer als die Breite des Transportelements ist. Der Wellendurchmesser entspricht an dieser Stelle in etwa dem Innendurchmesser des Transportelementes, so dass das Transportelement im montierten Zustand in axialer Richtung der Welle gesehen durch die Seitenwände der Vertiefung an einem axialen Verrutschen auf der Welle gehindert wird bzw. nur ein geringes Spiel vorhanden ist, mit dem sich das Transportelement axial bewegen kann. Hierdurch wird erreicht, dass auf einfache Weise eine ortsfeste Befestigung des Transportelements auf der Welle erzielt wird. Insbesondere kann hierdurch auf weitere Befestigungselemente verzichtet werden. Ein solches Verhindern eines axialen Verrutschens des Transportelements auf der Welle in einer vorgefertigten Vertiefung der Welle ist nur durch die durch die zweisegmentförmige Ausbildung des Transportelementes ermöglichte radiale Montage möglich, wohingegen bei einer axialen Montage eine entsprechende Befestigung nicht möglich ist.

Das Transportelement ist insbesondere von der Welle unabhängig auf dieser drehbar angeordnet, so dass die Transportelemente beim Transport der Wertscheine durch den Kontakt zu diesen entsprechend mit der Transportgeschwindigkeit der Wertscheine mitgedreht werden können. Hierzu ist insbesondere der Innendurchmesser des Transportelementes größer ausgebildet als der Durchmesser der Welle an der Stelle, an der das Transportelement auf der Welle angeordnet ist. Bei alternativen Ausführungsformen der Erfindung kann das Transportelement auch drehfest auf der Welle angeordnet sein, so dass es sich immer mit der gleichen Winkelgeschwindigkeit wie die Welle dreht. Hierzu wird insbesondere ein Transportelement verwendet, dessen Innendurchmesser geringfügig geringer ist als der Durchmesser der Welle, so dass das Transportelement im montierten Zustand durch eine Presspassung an einem Verdrehen relativ zur Welle gehindert wird.

Die Welle ist insbesondere die Welle einer Weiche, mit deren Hilfe die Wertscheine von einem ersten Transportband zu einem zweiten Transportband umgelenkt werden können. Hierzu umfasst die Welle mindestens zwei Führungsfinger, die die Wertscheine bei der entsprechenden Weichenstellung umlenken. Das Transportelement ist im montierten Zustand zwischen den Führungsfingern angeordnet, so dass die Wertscheine beim Transport der Wertscheine entlang der Weiche durch das Transportelement geführt werden und somit Wertscheinstaus effektiv verhindert werden.

Die Führungsfinger sind vorzugsweise auf die Welle aufgespritzt, so dass auf eine aufwändige axiale Montage der Führungsfinger verzichtet werden kann. Insbesondere muss somit nicht jeder Führungsfinger einzeln gefertigt und aufgesteckt werden, sondern es können alle Führungsfinger der Welle bei einem Spritzverfahren auf die Welle aufgebracht werden. Durch die radiale Montage der Transportelemente ist es möglich, die Transportelemente zwischen den bereits auf die Welle aufgespritzten Führungsfingern anzuordnen.

Bei einer bevorzugten Ausführungsform liegt der Drehmittelpunkt des Transportelementes nicht auf der Achse der Welle, sondern ist außerhalb dieser angeordnet. Hierdurch wird erreicht, dass das Transportelement optimal unabhängig von der Position der Welle an den Transportpfad angepasst werden kann, so dass die Wertscheine optimal durch das Transportelement geführt werden.

Weitere Merkmale und Vorteile der Erfindung ergeben sich aus der folgenden Beschreibung, die die Erfindung im Zusammenhang mit den beigefügten Figuren anhand von Ausführungsbeispielen näher erläutert.

Es zeigen:
- Fig.1: eine schematische perspektivische Darstellung eines Weichenkörpers mit montierten Transportrollen;
- Fig.2: eine schematische perspektivische Darstellung einer Welle des Weichenkörpers nach Fig.1;
- Fig.3: eine schematische perspektivische Darstellung des Weichenkörpers nach Fig.1 ohne Transportrolle;
- Fig.4: eine schematische perspektivische Darstellung eines Segments einer Transportrolle;
- Fig.5: eine weitere schematische perspektivische Darstellung des Segments nach Fig.4;
- Fig.6: eine schematische perspektivische Darstellung einer Transportrolle;
- Fig.7: eine schematische perspektivische Darstellung eines Ausschnitts des Weichenkörpers in den Fig.1 und 3 mit auf ihm montierten Transportrollen;
- Fig.8: eine schematische perspektivische Darstellung eines Ausschnitts des Weichenkörpers nach den Fig.1, 3 und 7 während der Montage einer Transportrolle; und
- Fig.9: eine schematische perspektivische Darstellung eines Ausschnitts des Weichenkörpers.

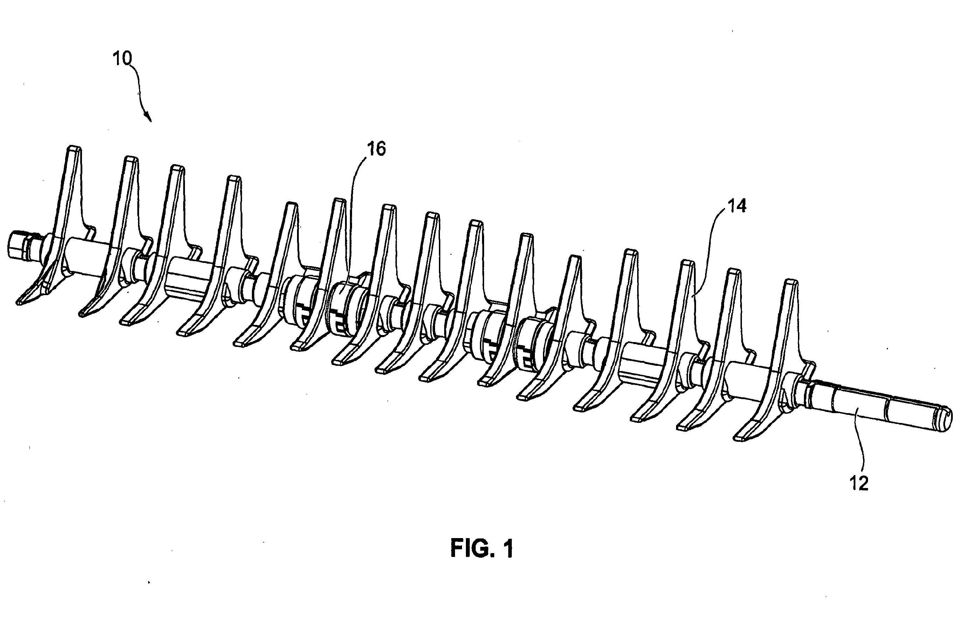

In Fig.1 ist eine schematische perspektivische Darstellung eines Weichenkörpers 10 einer Weiche einer Vorrichtung zur Handhabung von Wertscheinen dargestellt. Bei der Vorrichtung handelt es sich insbesondere um einen Geldautomaten, ein automatisches Kassensystem und/oder eine automatische Tresorkasse, in denen bei einer Ein- und/oder Auszahlung von Wertscheinen diese entlang von Transportpfaden transportiert werden. Die Weiche dient dazu, die Wertscheine von einem Transportpfad in einen anderen Transportpfad entsprechend ihrer Weichenstellung umzulenken.

Das Umlenken der Wertscheine erfolgt hierbei mit Hilfe des Weichenkörpers 10, der eine Welle 12 und eine Vielzahl von auf der Welle 12 angeordneter und drehfest mit dieser verbundener Führungsfinger umfasst, von denen einer beispielhaft mit dem Bezugszeichen 14 bezeichnet ist. Die Welle 12 kann über eine nicht dargestellte Verstelleinheit, insbesondere einen Schrittmotor oder einen Hubmagneten, zwischen verschiedenen Weichenstellungen verdreht werden, wobei bei einem Verdrehen der Welle 12 auch die drehfest mit dieser verbundenen Führungsfinger 14 verdreht werden, so dass die Wertscheine entsprechend der Weichenstellung entlang der Transportfinger 14 von einem Transportpfad in einen anderen Transportpfad transportiert werden.

Ferner umfasst der Weichenkörper 10 vier Transportrollen, von denen eine beispielhaft mit dem Bezugszeichen 16 bezeichnet ist. Die Transportrollen 16 dienen zur Führung der Wertscheine während diese entlang der Weiche transportiert werden. An den der Weiche zugewandten Enden der Transportpfade sind jeweils Transportelemente zum Transport der Wertscheine, insbesondere Rollenpaare, angeordnet, die die Wertscheine der Weiche zuführen bzw. von der Weiche abführen. Durch das Anordnen der Transportrollen 16 auf dem Weichenkörper 10 wird der Abstand zwischen zwei benachbarten Transportelementen der Transportpfade verringert, so dass auch kleine Wertscheine transportiert werden können und die Sicherheit des Transports erhöht wird, so dass Wertscheinstaus vermieden werden. Die Transportelemente 16 sind hierzu drehbar auf dem Weichenkörper 10 angeordnet, so dass sich diese mit der Transportgeschwindigkeit der Wertscheine mitdrehen können und sich in beide Richtungen entsprechend der Transportrichtung der Wertscheine drehen können. Die Transportrollen 16 sind jeweils zwischen zwei benachbarten Führungsfingern 14 angeordnet.

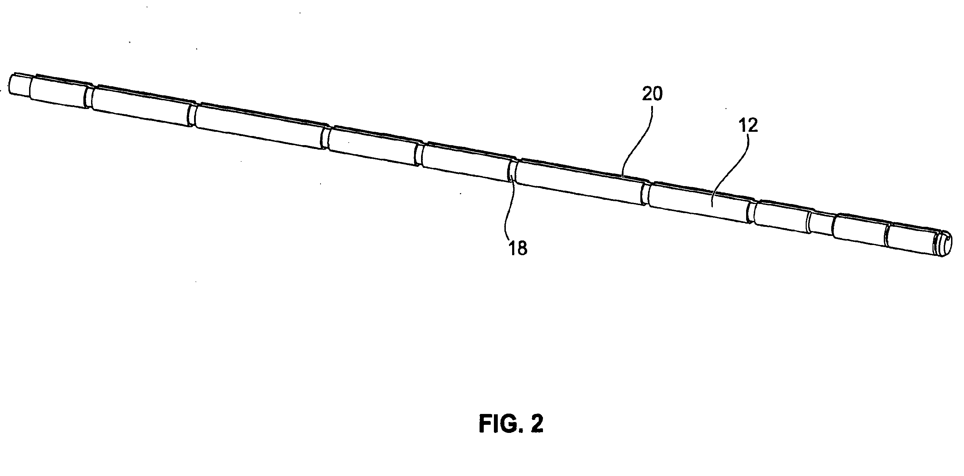

In Fig.2 ist eine schematische perspektivische Darstellung der Welle 12 des Weichenkörpers 10 dargestellt. Elemente mit gleichem Aufbau oder gleicher Funktion haben dieselben Bezugszeichen.

Die Welle 12 umfasst mehrere umlaufende Vertiefungen, von denen eine beispielhaft mit dem Bezugszeichen 18 bezeichnet ist, und eine in axiale Richtung der Welle 12 verlaufende Nut 20. Die Welle 12 wird deshalb auch als Profilwelle bezeichnet. Die umlaufenden Vertiefungen 18 können jeweils identisch ausgebildet sein oder auch unterschiedliche Abmessungen haben. Durch die umlaufenden Vertiefungen 18 und die axiale Nut 20 wird eine orts- und drehfeste Anordnung der Führungsfinger 14 auf der Welle 12 erreicht. Hierzu werden die Führungsfinger 14 in einem Spritzverfahren direkt auf die Welle 12 aufgespritzt. Hierbei wird die Welle 12 komplett in das Spritzwerkzeug eingelegt, und die Führungsfinger 14 werden zusammen aufgespritzt.

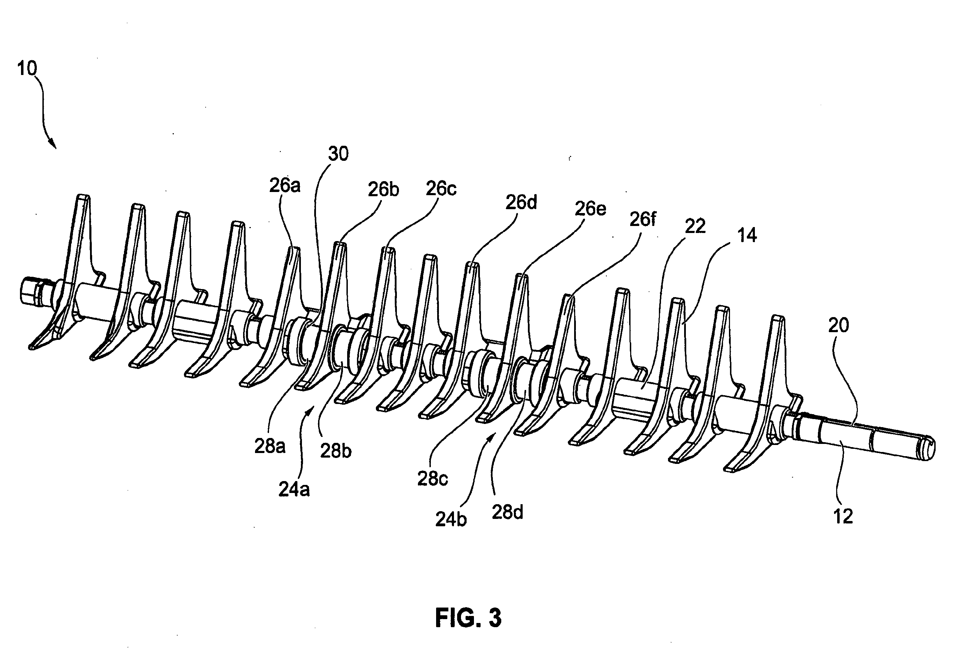

In Fig.3 ist eine schematische perspektivische Darstellung des Weichenkörpers 10 nach dem Aufspritzen der Führungsfinger 14 auf die Welle 12 gezeigt. Hierbei ist nicht jeder Führungsfinger 14 einzeln auf die Welle 12 aufgespritzt, sondern es sind teilweise zwei oder drei zueinander benachbarte Führungsfinger 14 gemeinsam als ein Element auf die Welle 12 aufgespritzt, wobei diese beiden benachbarten Führungsfinger 14 jeweils durch ein in axiale Richtung der Welle 12 verlaufendes Verbindungselement 22 miteinander verbunden sind. Eine solche Einheit aus miteinander verbundenen Führungsfingern 14 wird auch als Führungsfingereinheit bezeichnet. Pro Führungsfingereinheit ist jeweils mindestens eine umlaufende Vertiefung 18 vorgesehen. Bei dem Aufspritzen der Führungsfinger 14 auf die Welle 12 werden die umlaufenden Vertiefungen 18 entsprechend mit dem Spritzmaterial ausgefüllt, so dass später ein axiales Verrutschen der Führungsfinger 14 bzw. der Führungsfingereinheiten verhindert wird. Auf die gleiche Weise wird auch die Nut 20 beim Spritzen der Führungsfinger 14 an den entsprechenden Stellen, an denen die Führungsfinger 14 angeordnet sind, mit dem Spritzmaterial gefüllt, so dass auch ein Verdrehen der Führungsfinger 14 bzw. der Führungsfingereinheiten vermieden wird und die Führungsfinger 14 drehfest mit der Welle 12 verbunden sind. Bei alternativen Ausführungsformen der Erfindung können auch alle Führungsfinger 14 miteinander verbunden sein. Alternativ kann jeder Führungsfinger 14 einzeln auf die Welle 12 aufgespritzt sein und somit keine Führungsfinger 14 über Verbindungselemente 22 miteinander verbunden sein. Ebenso können auch mehr als zwei bzw. drei benachbarte Führungsfinger 14 jeweils über ein Verbindungselement 22 miteinander verbunden sein.

Durch das Aufspritzen der Führungsfinger 14 auf die Welle 12 wird verglichen mit einer getrennten Fertigung der Führungsfinger 14 und einer axialen Montage der Führungsfinger 14 auf der Welle 12 der Montageaufwand erheblich reduziert. Insbesondere müssen die Führungsfinger 14 nicht einzeln gefertigt werden und einzeln axial auf die Welle 12 aufgesteckt werden. Hierdurch werden Aufwand, Zeit und Kosten eingespart. Des Weiteren ist es bei dem Aufspritzen der Führungsfinger 14 auf die Welle 12 nicht notwendig, die Führungsfinger 14 durch zusätzliche Elemente gegen ein axiales Verrutschen zu sichern, wie es bei einer axialen Montage der Führungsfinger 14 nötig ist.

Der Weichenkörper 10 umfasst zwei Führungsfingereinheiten 24a, 24b, die jeweils drei Führungsfinger 26a bis 26f umfassen. Zwischen jeweils zwei benachbarten Führungsfingern 26a bis 26f der jeweiligen Führungsfingereinheit 24a, 24b ist eine umlaufende Vertiefung 28a bis 28d ausgebildet, die zur Lagerung der Transportrollen 16 dienen. Die Vertiefungen 28a bis 28d sind insbesondere bei dem Aufspritzen der Führungsfinger 14, 26a bis 26f auf die Welle 12 direkt mit ausgebildet. Der Durchmesser an der Stelle der Vertiefung 28a bis 28d ist geringfügig geringer als der Innendurchmesser der Transportrollen 16, so dass sich die Transportrollen 16 frei drehen können und somit über den Kontakt zu den transportierten Wertscheinen mit der Transportgeschwindigkeit der Wertscheine mitgetrieben werden. Die seitlichen Wandungen der Vertiefungen 28a bis 28d verhindern ein Verrutschen der Transportrollen 16 in axialer Richtung, so dass die Transportrollen 16 ortsfest auf der Welle 12 angeordnet sind. Eine dieser seitlichen Wandungen ist beispielhaft mit dem Bezugszeichen 30 bezeichnet. Die Breite der Transportrollen 16 entspricht in etwa der Breite der Vertiefungen 28a bis 28d.

Bei alternativen Ausführungsformen der Erfindung kann zwischen den benachbarten Führungsfingern 26a bis 26f auch jeweils keine Vertiefung 28a bis 28d ausgebildet sein, sondern der Abstand zwischen den benachbarten Führungsfingern 26a bis 26f kann in etwa der Breite der Transportrollen 16 entsprechen, so dass durch die Führungsfinger 26a bis 26f ein axiales Verrutschen der Transportrollen 16 vermieden wird.

Da die Führungsfinger 14, 26a bis 26f von vorneherein fest auf die Welle 12 aufgespritzt sind, können die Transportrollen 16 nicht wie üblich axial auf die Welle 12 aufgesteckt werden, sondern müssen radial montiert werden. Unter der radialen Montage wird verstanden, dass die Transportrollen 16 quer zur Richtung der Achse der Welle 12 aufgesteckt werden. Um dies zu ermöglichen, umfassen die Transportrollen jeweils zwei Segmente 32a, 32b, die in einem unmontierten Zustand voneinander getrennt sind und im montierten Zustand miteinander verbunden sind und die Welle 12 bzw. die entsprechenden Vertiefungen 28a bis 28d der Führungsfingereinheiten 24a, 24b umschließt.

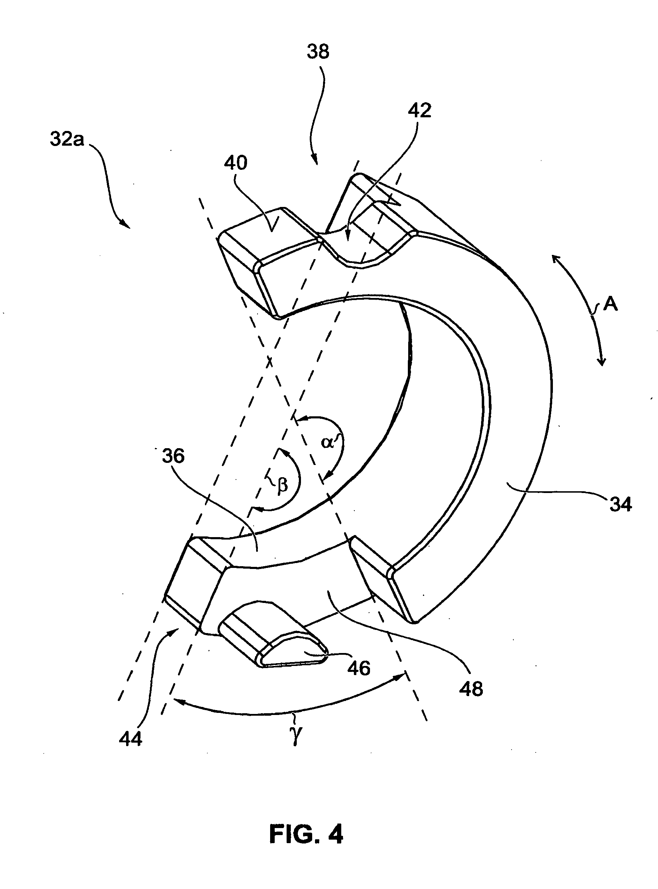

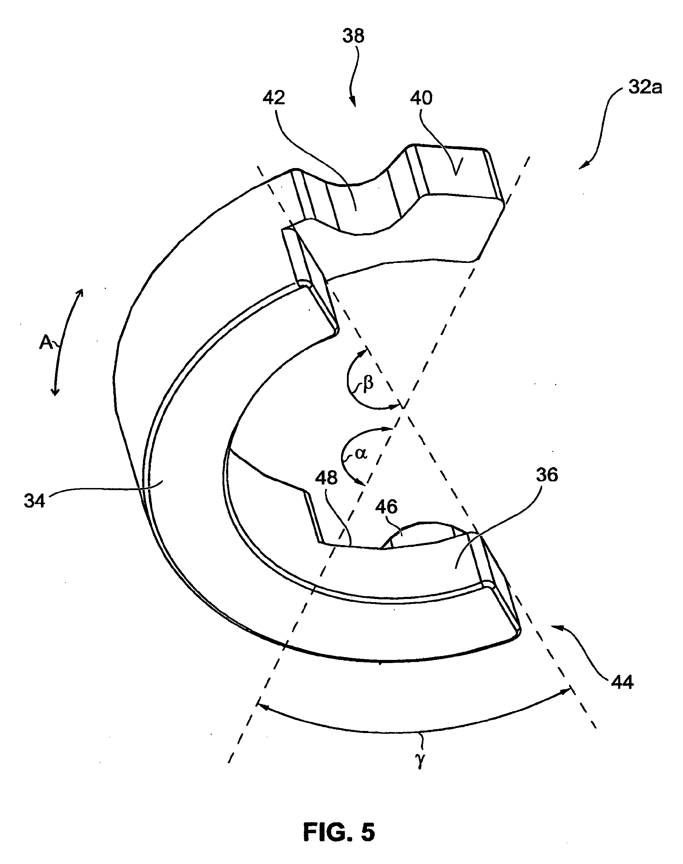

In den Fig.4 und 5 ist jeweils eine perspektivische schematische Darstellung eines dieser Segmente 32a, 32b der Transportrollen 16 gezeigt. Die Segmente 32a, 32b sind insbesondere identisch ausgebildet, so dass nur eine Segmentart gefertigt werden muss, wodurch Kosten eingespart werden und die Gefahr von Verwechslungen bei der Montage vermieden wird. Dementsprechend wird im Folgenden in Verbindung mit den Fig.4 und 5 jeweils nur die Form eines Segmentes 32a erläutert. Das entsprechende zweite Segment 32b der Transportrolle 12 ist identisch ausgebildet. Bei alternativen Ausführungsformen der Erfindung können die beiden Segmente auch unterschiedlich ausgebildet sein.

Das Segment 32a umfasst zwei ringsegmentförmige Teilbereiche 34, 36, die in axialer Richtung unmittelbar aneinander angrenzen. Die beiden Teilbereiche 34, 36 sind insbesondere einstückig ausgebildet. Sowohl der erste Teilbereich 34 als auch der zweite Teilbereich 36 umschließen jeweils einen Winkel α, β von 180°. Die beiden Teilbereiche 34, 36 selbst sind in Umfangsrichtung A um einen Winkel γ relativ zueinander versetzt. Der Winkel γ hat insbesondere einen Wert im Bereich zwischen 20° und 60°, vorzugsweise zwischen 40° und 50°. Über die Größe des Winkels γ lässt sich die Flexibilität des Segmente 32a, 32b, insbesondere der Endbereiche 38, 44, einstellen. Je Größer der Winkel γ ist, umso größer ist die Flexibilität und umso leichter können die Segmente 32a, 32b miteinander verbunden und voneinander getrennt werden. Der erste Teilbereich 34 hat in einem Endbereich 38 auf seiner Mantelfläche 40 eine Aussparung 42. Die Aussparung 42 ist insbesondere derart ausgebildet, dass sie in axialer Richtung durchgehend ist.

Der zweite Teilbereich 36 hat an einem Endbereich 44 ein komplementär zur Aussparung 42 ausgebildetes Eingriffselement 46. Das Eingriffselement 46 ist in axiale Richtung gerichtet und an der Seite 48 des zweiten Teilbereichs 36 angeordnet, an der um den Winkel γ versetzt auch der erste Teilbereich 34 angeordnet ist.

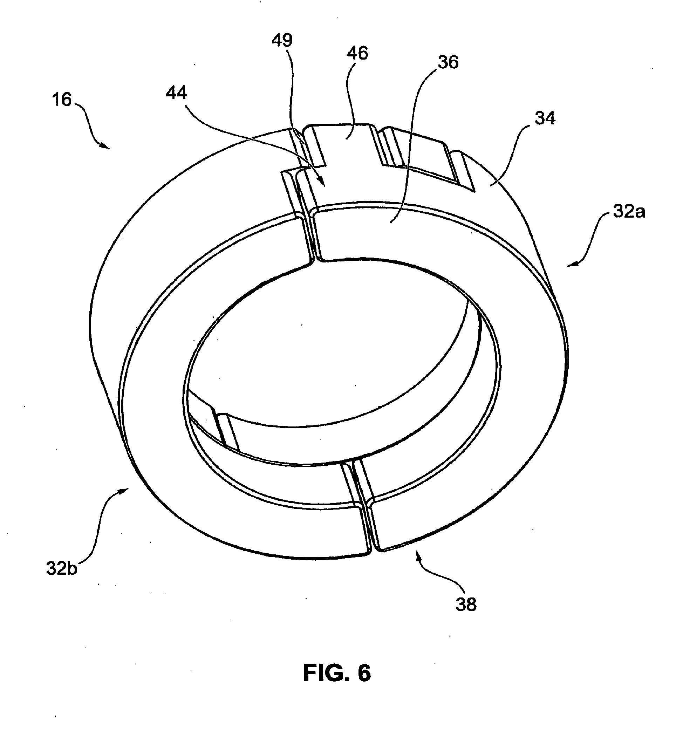

In Fig.6 ist eine schematische perspektivische Darstellung der Transportrolle 16 gezeigt, wobei die beiden Segmente 32a, 32b bei der in Fig.6 gezeigten montierten Transportrolle 16 miteinander verbunden sind. Die Welle 12 und die Führungsfinger 14, 26a bis 26f sind in Fig.6 nicht dargestellt.

In dem montierten Zustand greift das Eingriffselement 46 des ersten Segments 32a in eine Aussparung 49 des zweiten Segmentes 32b und ein nicht sichtbares Eingriffselement des zweiten Segmentes 32b greift in die Aussparung 42 des ersten Segmentes 32a. Auf diese Weise wird eine Rastverbindung zwischen dem ersten Segment 32a und dem zweiten Segment 32b hergestellt, durch die die Segmente 32a, 32b fest miteinander verbunden sind. Die Segmente 32a, 32b sind durch diese Rastverbindung derart miteinander verbunden, dass sie beim regulären Betrieb der Transportrolle 16 nicht unbeabsichtigt voneinander gelöst werden können. Die Segmente 32a, 32b sind bei einer bevorzugten Ausführungsform der Erfindung jedoch derart elastisch ausgebildet, dass die Rastverbindung zerstörungsfrei wieder gelöst werden kann, so dass die Transportrollen 16 nach dem Lösen und der Demontage von der Welle 12 erneut eingesetzt werden können.

Durch die zuvor beschriebene konkrete Ausgestaltung der Rastverbindung zwischen den Segmenten 32a, 32b wird erreicht, dass diese Segmente durch eine einfache radiale Bewegung aufeinander gesteckt werden können. Ist keine Bewegung in axialer Richtung notwenig, so dass die Transportrolle 16 auf engstem Raum, insbesondere dann, wenn sie direkt von zwei Führungsfingern 26a bis 26f seitlich umschlossen ist, montiert werden kann.

Die Eingriffselemente 46 sind an der im montierten Zustand in Richtung der Aussparung 42, 49 des anderen Segmentes 32a, 32b gerichteten Seite abgeflacht, so dass diese einfach bei der Montage über die Mantelfläche des jeweils anderen Segmentes geführt werden können bis sie in die Aussparung 42, 49 einrasten.

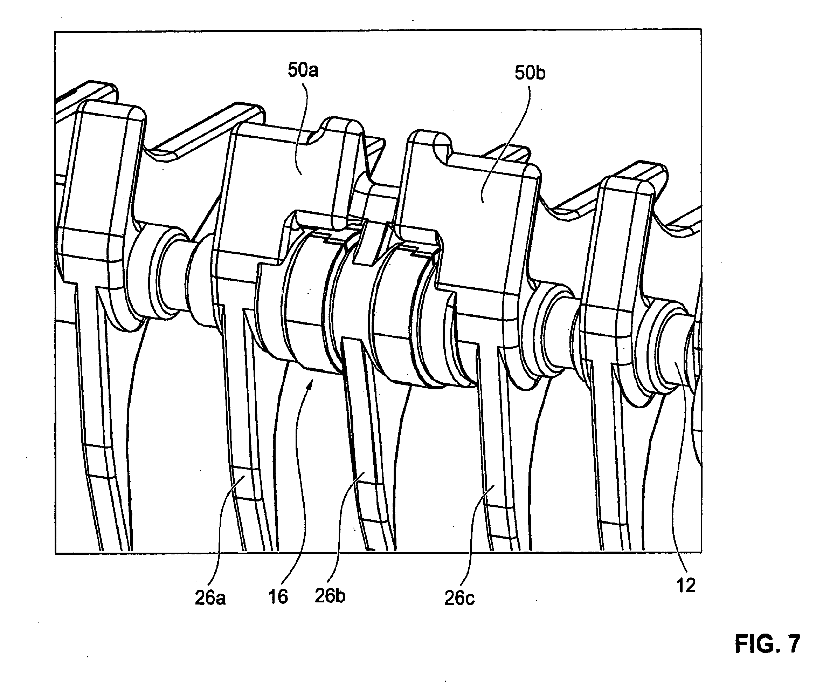

In Fig.7 ist eine schematische perspektivische Darstellung eines Ausschnitts des Weichenkörpers 12 mit auf ihm montierten Transportrollen 16 gezeigt. Durch die zweiteilige Ausbildung der Transportrollen 16 aus zwei Segmenten 32a, 32b können die Transportrollen 16 durch die einfach gestaltete Rastverbindung auch bei überstehenden Leitelementen 50a, 50b der Führungsfinger 26a bis 26f einfach radial montiert werden.

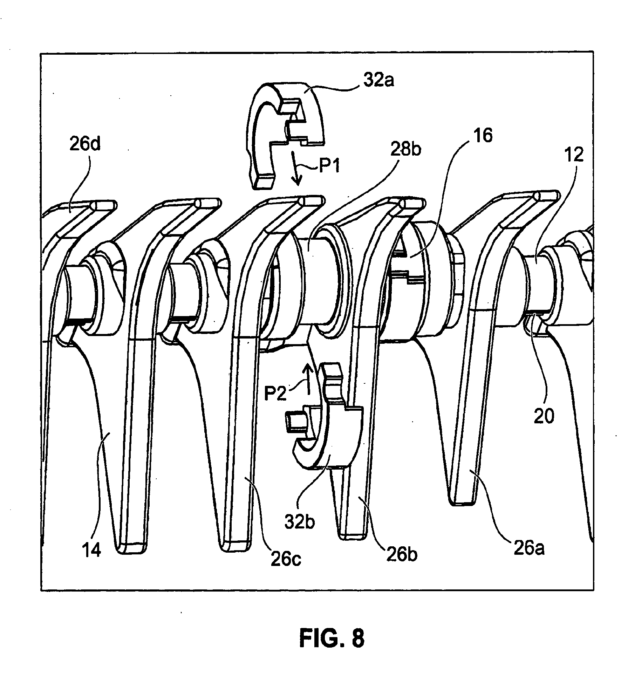

In Fig.8 ist eine schematische perspektivische Darstellung eines Ausschnitts des Weichenkörpers 10 gezeigt, wobei die radiale Montage der Transportrolle 16 durch ein radiales Zusammenstecken der Segmente 32a, 32b dargestellt ist. Die Segmente 32a, 32b werden durch eine lineare in radiale Richtung gerichtete Bewegung aufeinander zu bewegt und auf die Welle 12 bzw. die Vertiefung 28c aufgesteckt. Die radiale Richtung, in die die Segmente 32a, 32b aufeinander zu bewegt werden, ist durch die Pfeile P1 und P2 angedeutet. Bei der Montage der Transportrolle 16 durch das Verbinden der Segmente 32a, 32b ist keine Drehbewegung notwendig. Ebenso ist keine in axiale Richtung gerichtete Bewegung der Segmente 32a, 32b notwendig.

Die Führungsfingereinheiten 24a, 24b sind an den Bereichen der Vertiefung 28a bis 28d, also den Bereichen, an denen die Transportrollen 16 aufgesteckt werden, derart ausgebildet, dass der Drehmittelpunkt der Transportrollen 16 nicht auf der Achse der Welle 12 liegt. Auf diese Weise wird erreicht, dass die Lage der Transportrollen 16 optimal auf den Transportpfad der Wertscheine abgestimmt werden kann. Eine solche exzentrische Lagerung der Transportrollen 16 kann durch die radiale Montagemöglichkeit der Transportrollen 16 realisiert werden, da die exzentrisch ausgebildeten Vertiefungen 28a bis 28d direkt aufgespritzt werden können und die Transportrollen 16 entsprechend der durch die Ver= tiefungen 28a bis 28d vorgegebenen Lage aufgesetzt werden können.

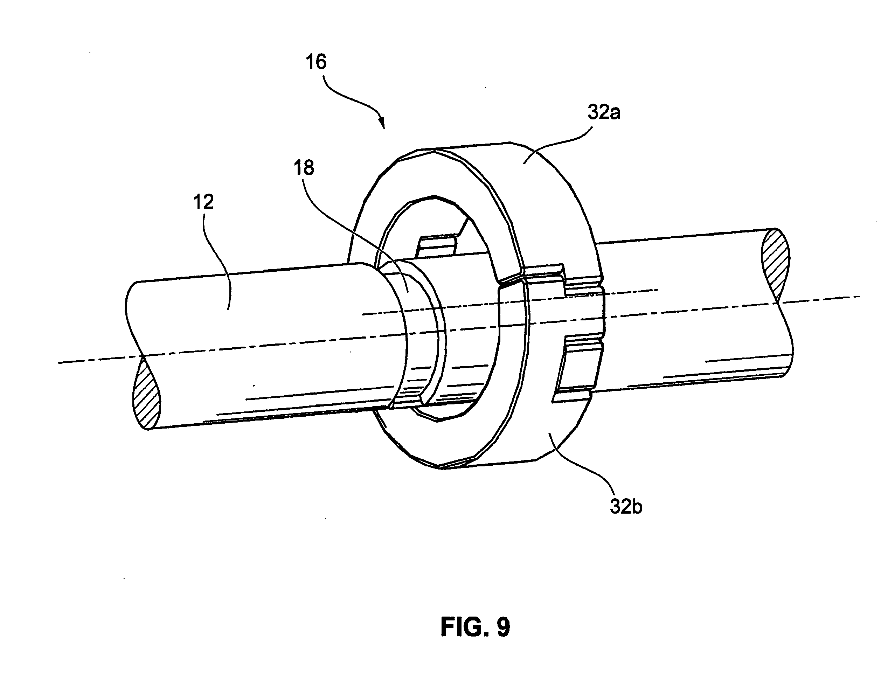

In Fig.9 ist ein Ausschnitt des Weichenkörpers 10 gezeigt, wobei die Weichenfingereinheiten 24a, 24b nicht dargestellt sind, so dass die nicht konzentrische Lage der Transportrolle 16 zur Welle 12 deutlich sichtbar ist.

Bei einer alternativen Ausführungsform der Erfindung können die Segmente 32a, 32b zusätzlich oder alternativ zur Rastverbindung auch über eine Steckverbindung, eine Schraubverbindung und/oder eine Klebverbindung miteinander verbunden sein. Ferner kann die Rastverbindung auch eine von der zuvor beschriebenen Form abweichende Ausgestaltung haben. Ebenso können alternativ die beiden Segmente 32a, 32b unterschiedlich ausgebildet sein, wobei die Segmente 32a, 32b derart ausgebildet sind, dass sie aufeinander aufsteckbar sind.

Des Weiteren können die aus zwei Segmenten 32a, 32b ausgebildeten Transportrollen 16 auch auf Wellen montiert werden, die nicht zu einer Weiche gehören. Insbesondere können die Transportrollen 16 auch direkt auf einer Welle montiert werden. Diese Welle kann sowohl in Umfangsrichtung verlaufende Vertiefungen aufweisen als auch ohne solche Vertiefungen, d. h. "glatt", ausgebildet sein.

### Bezugszeichenliste

- 10: Weichenkörper
- 12: Welle
- 14: Führungsfinger
- 16: Transportrolle
- 18: Vertiefung
- 20: Nut
- 22: Verbindungselement
- 24a, 24b: Führungsfingereinheit
- 26a bis 26f: Führungsfinger
- 28a bis 28d: Vertiefung
- 30: Seitenwand
- 32a, 32b: Segment
- 34, 36: Teilbereich
- 38, 44: Endbereich
- 40: Mantelfläche
- 42, 49: Aussparung
- 46: Eingriffselement
- 48: Seite
- 50a, 50b: Leitelement
- P1, P2: Montagerichtung
- A: Umfangsrichtung
- α, β, γ: Winkel

## Patentansprüche

1. Vorrichtung zur Handhabung von Wertscheinen,
mit mindestens einer Welle (12), auf der mindestens ein Transportelement (16) zum Transport der Wertscheine angeordnet ist,
wobei das Transportelement (16) ein erstes Segment (32a) und ein in einem unmontierten Zustand vom ersten Segment (32a) getrenntes zweites Segment (32b) umfasst,
wobei in einem montierten Zustand das erste Segment (32a) und das zweite Segment (32b) fest miteinander verbunden sind und die Welle (12) von den verbundenen Segmenten (32a, 32b) umschlossen wird,
wobei die Segmente (32a, 32b) im montierten Zustand über mindestens eine Rastverbindung und/oder mindestens eine Steckverbindung miteinander verbunden sind, und
wobei die Segmente (32a, 32b) jeweils ringsegmentförmig sind,
**dadurch gekennzeichnet, dass** die Segmente (32a, 32b) jeweils einen ersten Teilbereich (34) und einen in axialer Richtung an den ersten Teilbereich (34) angrenzenden zweiten Teilbereich (36) haben, dass der erste Teilbereich (34) und der zweite Teilbereich (36) jeweils einen Winkel (α, β) von etwa 180° umschließen, dass der erste Teilbereich (34) und der zweite Teilbereich (36) in Umfangsrichtung (A) zueinander versetzt sind, dass der erste Teilbereich (34) jeweils in einem Endbereich (38) auf seiner Mantelfläche (40) eine Aussparung (42, 49) hat, dass der zweite Teilbereich (36) jeweils ein zur Aussparung (42, 49) komplementäres Eingriffelement (46) umfasst, und dass im montierten Zustand das Eingriffelement (46) des ersten Segments (32a) in die Aussparung (49) des zweiten Segments (32b) und das Eingriffselement des zweiten Segments (32b) in die Aussparung (42) des ersten Segments (32a) eingreifen und die Segmente (32a, 32b) miteinander verbinden.

2. Vorrichtung nach Anspruch 1, **dadurch gekennzeichnet, dass** das erste Segment (32a) und das zweite Segment (32b) derart miteinander verbindbar sind, dass sie radial auf der Welle (12) montierbar sind.

3. Vorrichtung nach einem der vorhergehenden Ansprüche, **dadurch gekennzeichnet, dass** die Segmente (32a, 32b) im montierten Zustand über mindestens eine Steckverbindung miteinander verbunden sind.

4. Vorrichtung nach einem der vorhergehenden Ansprüche, **dadurch gekennzeichnet, dass** die Segmente (32a, 32b) im montierten Zustand über mindestens zwei Schrauben miteinander verbunden sind.

5. Vorrichtung nach einem der vorhergehenden Ansprüche, **dadurch gekennzeichnet, dass** die Verbindung der Segmente (32a, 32b) zerstörungsfrei lösbar ist.

6. Vorrichtung nach einem der vorhergehenden Ansprüche, **dadurch gekennzeichnet, dass** die Segmente (32a, 32b) im montierten Zustand über eine Klebverbindung miteinander verbunden sind.

7. Vorrichtung nach einem der vorhergehenden Ansprüche, **dadurch gekennzeichnet, dass** das erste Segment (32a) und das zweite Segment (32b) identisch geformt sind.

8. Vorrichtung nach einem der vorhergehenden Ansprüche, **dadurch gekennzeichnet, dass** das Transportelement (16) eine Rolle oder eine Walze umfasst.

9. Vorrichtung nach einem der vorhergehenden Ansprüche, **dadurch gekennzeichnet, dass** die Welle (12) mindestens eine umlaufende Vertiefung hat, wobei die Breite der Vertiefung der Breite des Transportelements (16) entspricht oder geringfügig größer ist als die Breite des Transportelements (16), und dass der Wellendurchmesser an der Stelle der Vertiefung in etwa dem Innendurchmesser des Transportelements (16) im montierten Zustand entspricht.

10. Vorrichtung nach einem der vorhergehenden Ansprüche, **dadurch gekennzeichnet, dass** das Transportelement (16) von der Welle (12) unabhängig auf dieser drehbar angeordnet ist.

11. Vorrichtung nach einem der vorhergehenden Ansprüche, **dadurch gekennzeichnet, dass** die Welle (12) eine Welle (12) einer Weiche (10) ist, mit deren Hilfe die Wertscheine umlenkbar sind, dass die Welle (12) mindestens zwei Führungsfinger (14, 26a bis 26f) zum Umlenken der Wertscheine umfasst, und dass das Transportelement (12) im montieren Zustand zwischen zwei Führungsfingern (14, 26a bis 26f) angeordnet ist.

12. Vorrichtung nach Anspruch 11, **dadurch gekennzeichnet, dass** die Führungsfinger (14, 26a bis 26f) auf die Welle (12) aufgespritzt sind.

## Claims

1. Apparatus for handling notes of value,
having at least one shaft (12), on which is arranged at least one transporting element (16) for transporting the notes of value,
wherein the transporting element (16) comprises a first segment (32a) and a second segment (32b), which, in a dismantled state, is separate from the first segment (32a),
wherein, in an assembled state, the first segment (32a) and the second segment (32b) are fixed to one another and the shaft (12) is enclosed by the connected segments (32a, 32b),
wherein the segments (32a, 32b), in the assembled state, are connected to one another via at least one matching connection and/or at least one plug-in connection, and
wherein the segments (32a, 32b) are each in ring-segment form,
**characterized in that** the segments (32a, 32b) each have a first sub-region (34) and a second sub-region (36), which is axially adjacent to the first sub-region (34), **in that** the first sub-region (34) and the second sub-region (36) each enclose an angle (α, β) of approximately 180°, **in that** the first sub-region (34) and the second sub-region (36) are offset in relation to one another in the circumferential direction (A), **in that** the first sub-region (34), in a respective end region (38), has a recess (42, 49) on its lateral surface (40), **in that** the second sub-region (36) comprises a respective engagement element (46), which complements the recess (42, 49), and **in that**, in the assembled state, the engagement element (46) of the first segment (32a) engages in the recess (49) of the second segment (32b) and the engagement element of the second segment (32b) engages in the recess (42) of the first segment (32a) and connect the segments (32a, 32b) to one another.

2. Apparatus according to Claim 1, **characterized in that** the first segment (32a) and the second segment (32b) can be connected to one another such that they can be assembled radially on the shaft (12).

3. Apparatus according to one of the preceding claims, **characterized in that** the segments (32a, 32b), in the assembled state, are connected to one another via at least one plug-in connection.

4. Apparatus according to one of the preceding claims, **characterized in that** the segments (32a, 32b), in the assembled state, are connected to one another via at least two screws.

5. Apparatus according to one of the preceding claims, **characterized in that** the connection between the segments (32a, 32b) can be released in a nondestructive manner.

6. Apparatus according to one of the preceding claims, **characterized in that** the segments (32a, 32b), in the assembled state, are connected to one another via an adhesive-bonding connection.

7. Apparatus according to one of the preceding claims, **characterized in that** the first segment (32a) and the second segment (32b) are formed identically.

8. Apparatus according to one of the preceding claims, **characterized in that** the transporting element (16) comprises a roller.

9. Apparatus according to one of the preceding claims, **characterized in that** the shaft (12) has at least one encircling depression, wherein the width of the depression corresponds to the width of the transporting element (16) or is slightly greater than the width of the transporting element (16), and **in that** the shaft diameter, at the location of the depression, corresponds approximately to the internal diameter of the transporting element (16) in the assembled state.

10. Apparatus according to one of the preceding claims, **characterized in that** the transporting element (16) is arranged in a rotatable manner on the shaft (12) in a manner independent of said shaft.

11. Apparatus according to one of the preceding claims, **characterized in that** the shaft (12) is a shaft (12) of a diverter (10), with the aid of which the notes of value can be deflected, **in that** the shaft (12) comprises at least two guide fingers (14, 26a to 26f) for deflecting the notes of value, and **in that** the transporting element (16), in the assembled state, is arranged between two guide fingers (14, 26a to 26f).

12. Apparatus according to Claim 11, **characterized in that** the guide fingers (14, 26a to 26f) are injection moulded onto the shaft (12).

## Revendications

1. Dispositif pour manipuler des documents de valeur, comprenant au moins un arbre (12) sur lequel est disposé au moins un élément de transport (16) pour le transport des documents de valeur,
l'élément de transport (16) comportant un premier segment (32a) et un deuxième segment (32b) séparé du premier segment (32a) à l'état non monté,
le premier segment (32a) et le deuxième segment (32b) étant reliés solidement l'un à l'autre à l'état monté et l'arbre (12) étant entouré par les segments reliés (32a, 32b),
les segments (32a, 32b) étant, à l'état monté, reliés l'un à l'autre par le biais d'au moins une liaison par encliquetage et/ou d'au moins une liaison par emboîtement, et
les segments (32a, 32b) étant à chaque fois en forme de segments annulaires,
**caractérisé en ce que** les segments (32a, 32b) présentent à chaque fois une première région partielle (34) et une deuxième région partielle (36) adjacente à la première région partielle (34) dans la direction axiale, **en ce que** la première région partielle (34) et la deuxième région partielle (36) forment à chaque fois un angle (α, β) d'approximativement 180°, **en ce que** la première région partielle (34) et la deuxième région partielle (36) sont décalées l'une par rapport à l'autre dans la direction périphérique (A), **en ce que** la première région partielle (34) présente à chaque fois, dans une région d'extrémité (38) sur sa surface d'enveloppe (40), un évidement (42, 49), **en ce que** la deuxième région partielle (36) comporte à chaque fois un élément d'engagement (46) complémentaire à l'évidement (42, 49), et **en ce qu'**à l'état monté, l'élément d'engagement (46) du premier segment (32a) s'engage dans l'évidement (49) du deuxième segment (32b) et l'élément d'engagement du deuxième segment (32b) s'engage dans l'évidement (42) du premier segment (32a) et les éléments d'engagement relient les segments (32a, 32b) l'un à l'autre.

2. Dispositif selon la revendication 1, **caractérisé en ce que** le premier segment (32a) et le deuxième segment (32b) peuvent être reliés l'un à l'autre de telle sorte qu'ils puissent être montés radialement sur l'arbre (12).

3. Dispositif selon l'une quelconque des revendications précédentes, **caractérisé en ce que** les segments (32a, 32b) sont reliés l'un à l'autre par le biais d'au moins une liaison par emboîtement à l'état monté.

4. Dispositif selon l'une quelconque des revendications précédentes, **caractérisé en ce que** les segments (32a, 32b) sont reliés l'un à l'autre par le biais d'au moins deux vis à l'état monté.

5. Dispositif selon l'une quelconque des revendications précédentes, **caractérisé en ce que** la liaison des segments (32a, 32b) peut être libérée de manière non destructive.

6. Dispositif selon l'une quelconque des revendications précédentes, **caractérisé en ce que** les segments (32a, 32b) sont reliés l'un à l'autre par le biais d'une liaison par collage à l'état monté.

7. Dispositif selon l'une quelconque des revendications précédentes, **caractérisé en ce que** le premier segment (32a) et le deuxième segment (32b) sont formés de manière identique.

8. Dispositif selon l'une quelconque des revendications précédentes, **caractérisé en ce que** l'élément de transport (16) comporte un rouleau ou un cylindre.

9. Dispositif selon l'une quelconque des revendications précédentes, **caractérisé en ce que** l'arbre (12) présente au moins un renfoncement périphérique, la largeur du renfoncement correspondant à la largeur de l'élément de transport (16) ou étant légèrement plus grande que la largeur de l'élément de transport (16), et **en ce que** le diamètre d'arbre à l'emplacement du renfoncement correspond approximativement au diamètre intérieur de l'élément de transport (16) à l'état monté.

10. Dispositif selon l'une quelconque des revendications précédentes, **caractérisé en ce que** l'élément de transport (16) est disposé sur l'arbre (12) de manière à pouvoir tourner indépendamment de celui-ci.

11. Dispositif selon l'une quelconque des revendications précédentes, **caractérisé en ce que** l'arbre (12) est un arbre (12) d'un aiguillage (10) à l'aide duquel les documents de valeur peuvent être déviés, **en ce que** l'arbre (12) comporte au moins deux doigts de guidage (14, 26a à 26f) pour dévier les documents de valeur, et **en ce que** l'élément de transport (16) est disposé entre deux doigts de guidage (14, 26a à 26f) à l'état monté.

12. Dispositif selon la revendication 11, **caractérisé en ce que** les doigts de guidage (14, 26a à 26f) sont surmoulés sur l'arbre (12).
